# FASCICULE DE BREVET EUROPEEN

(11) **EP 2 993 130 B1**
(45) Date de publication et mention de la délivrance du brevet: **14.11.2018**
(21) Numéro de dépôt: 15182284.8
(22) Date de dépôt: 25.08.2015
(51) Int. Cl.: B64D 25/00, B64D 47/02, B64D 45/00

(54) **FEU LUMINEUX ET PROCÉDÉ DE FABRICATION D'UN TEL FEU**
SIGNALLICHT UND HERSTELLUNGSVERFAHREN
SIGNAL LIGHT AND METHOD OF MANUFACTURE

(30) Priorité: 04.09.2014 FR 1458300
(43) Date de publication de la demande: 09.03.2016
(73) Titulaire: NSE Industries, 03250 Nizerolles (FR)
(72) Inventeur: Laurin, Guillaume, 92100 Boulogne-Billancourt (FR); Disdier, Patrick, 83200 Toulon (FR)
(74) Mandataire: Lavoix

(56) Documents cités:
- EP-A1- 2 669 704
- WO-A2-2014/028091
- US-A- 5 334 982
- US-A1- 2008 158 897
- US-A1- 2008 180 965

## Description

La présente invention concerne un feu lumineux comprenant un socle, un capot de protection et au moins une source lumineuse adaptée pour émettre un faisceau lumineux à travers le capot de protection, le socle et le capot de protection étant solidaires l'un de l'autre et formant un boitier de protection, chaque source lumineuse étant disposée à l'intérieur du boitier de protection.

L'invention concerne le domaine des feux lumineux, notamment des feux lumineux pour un aéronef, tel qu'un avion ou un hélicoptère. L'invention concerne notamment les feux de signalisation extérieurs à l'aéronef (navigation, position, anticollision, éclairage, sécurité ou autre), ces feux extérieurs de signalisation étant par exemple fixés au fuselage de l'aéronef.

On connaît un feu lumineux du type précité. La source lumineuse est généralement alimentée par un bus d'alimentation électrique externe au feu lumineux, le feu lumineux comprenant éventuellement un convertisseur pour convertir le courant d'entrée, fourni par le bus d'alimentation interne à l'avion, en un courant adapté pour la source lumineuse. Le capot de protection permet de protéger la source lumineuse contre l'environnement extérieur, à la fois d'un point de vue thermique et d'un point de vue mécanique, et est généralement transparent pour permettre la diffusion du faisceau lumineux.

Un tel feu lumineux est généralement fixé au sommet de la dérive arrière, également appelé empennage vertical, lorsque l'aéronef est un avion, et à l'extrémité supérieure de la queue, au-dessus du rotor anti-couple, lorsque l'aéronef est un hélicoptère.

US 5,334,982 A, WO 2014/028091 A2 et US 2008/0158897 A1 décrivent chacun un feu lumineux selon le préambule des revendications 1 et 2.

Toutefois, les feux lumineux actuels pour aéronefs n'ont qu'une unique fonctionnalité lumineuse.

Le but de l'invention est de proposer un feu lumineux ayant une fonctionnalité principale de signalisation visuelle, et proposant en outre une fonctionnalité additionnelle.

A cet effet, l'invention a pour objet un feu lumineux selon l'une quelconque des revendications 1 et 2.

Le feu lumineux selon l'invention propose ainsi une première fonctionnalité de signalisation visuelle, et propose en outre une deuxième fonctionnalité d'émission et/ou de réception d'ondes radioélectriques en comprenant en outre l'antenne radioélectrique adaptée pour émettre et/ou recevoir des ondes radioélectriques vers et/ou depuis l'extérieur du feu lumineux.

Suivant d'autres aspects avantageux de l'invention, le feu lumineux comprend une ou plusieurs des caractéristiques suivantes, suivant les revendications dépendantes 3 à 7.

Ces caractéristiques et avantages de l'invention apparaîtront à la lecture de la description qui va suivre, donnée uniquement à titre d'exemple non limitatif, et faite en référence aux dessins annexés, sur lesquels :
- la figure 1 est une vue externe et en perspective d'un feu lumineux selon un premier mode de réalisation de l'invention, le feu lumineux comprenant un socle, un capot de protection, un bloc lumineux et une antenne radioélectrique, le socle et le capot de protection étant solidaires l'un de l'autre et formant un boîtier de protection à l'intérieur duquel sont disposées le bloc lumineux et l'antenne radioélectrique,
- la figure 2 est une vue schématique et en perspective du feu lumineux de la figure 1, sur laquelle certains éléments internes ont été représentés en pointillés,
- la figure 3 est une vue en perspective du bloc lumineux et de l'antenne radioélectrique du feu de la figure 1, et
- la figure 4 est une vue schématique et en perspective d'un feu lumineux selon un deuxième mode de réalisation de l'invention.

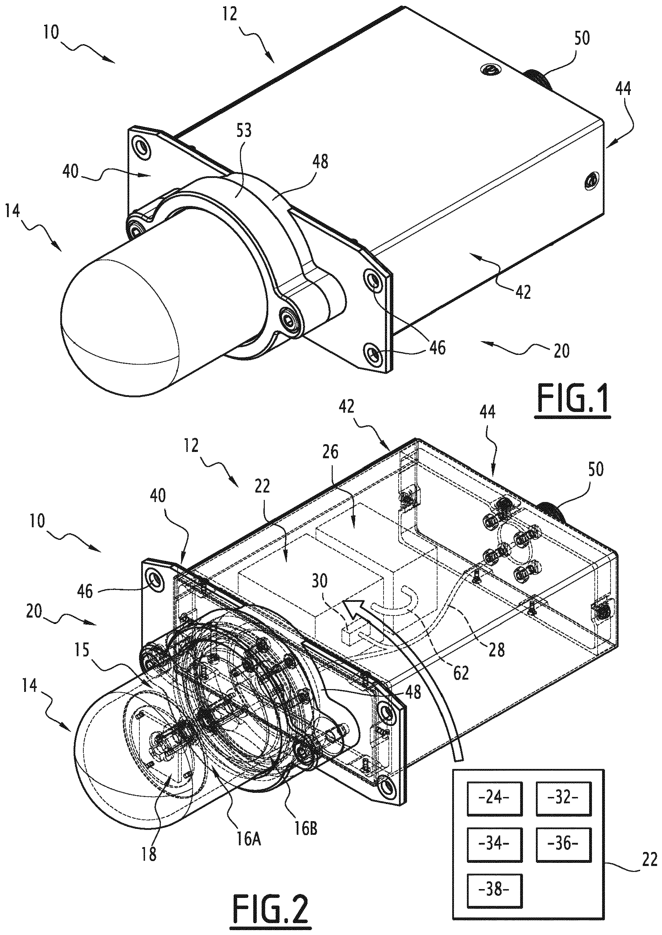

Sur les figures 1 et 2, un feu lumineux 10 comprend un socle 12, un capot de protection 14, un bloc lumineux 15 comportant au moins une source lumineuse 16A, 16B, et au moins une antenne radioélectrique 18. Le socle 12 et le capot de protection 14 sont solidaires l'un de l'autre et forment un boîtier de protection 20, le bloc lumineux 15 étant disposé à l'intérieur du boîtier de protection 20 et chaque antenne radioélectrique 18 étant solidaire du boîtier de protection 20. Chaque antenne radioélectrique 18 est, par exemple, disposée à l'intérieur du boîtier de protection 20. En variante, non représentée, au moins une antenne radioélectrique 18, ou encore chaque antenne radioélectrique 18, est disposée à l'extérieur du boîtier de protection 20.

Dans l'exemple de réalisation des figures 1 à 3, le feu lumineux 10 comprend deux sources lumineuses, à savoir une première source lumineuse 16A et une deuxième source lumineuse 16B, et une seule antenne radioélectrique 18. En variante non représentée, le feu lumineux 10 comprend une pluralité d'antennes radioélectriques 18.

Le feu lumineux 10 est de préférence un feu lumineux pour un aéronef, non représenté, de préférence encore un feu de signalisation extérieur pour l'aéronef, tel qu'un feu de navigation, un feu de position, un feu anticollision, un feu d'éclairage, un feu de sécurité ou encore tout feu de signalisation fixé à l'extérieur de l'aéronef. Le feu lumineux 10 est, par exemple, destiné à être fixé au fuselage de l'aéronef, de préférence à une extrémité de l'aéronef, telle qu'en partie supérieure de la dérive lorsque le feu lumineux 10 est un feu d'anticollision et que l'aéronef est un avion, ou encore à l'extrémité supérieure de la queue, lorsque l'aéronef est un hélicoptère. Le feu lumineux 10 comprend en outre un module électronique 22 comportant un émetteur radioélectrique 24 relié à l'antenne radioélectrique 18, l'émetteur 24 étant adapté pour émettre, via l'antenne radioélectrique 18, des signaux radioélectriques vers l'extérieur du boîtier de protection 20. En variante, le module électronique 22 comprend un émetteur-récepteur radioélectrique relié à l'antenne radioélectrique 18, l'émetteur-récepteur étant adapté pour émettre, via l'antenne radioélectrique 18, des signaux radioélectriques vers l'extérieur du boîtier de protection 20 et/ou pour recevoir, via l'antenne 18, des signaux radioélectriques depuis l'extérieur du boîtier de protection 20.

Lorsqu'en variante le feu lumineux 10 comprend plusieurs antennes radioélectriques 18, celles-ci sont toutes reliées à l'émetteur radioélectrique 24 ou bien sont chacune reliées à un émetteur 24 respectif, auquel cas le feu lumineux comprend également plusieurs émetteurs radioélectriques 24. La pluralité d'antennes radioélectriques 18 permet d'avoir un spectre d'émission/réception plus important et/ou des diagrammes d'émission/réception complémentaires d'une antenne 18 à l'autre.

Le feu lumineux 10 comprend en outre, par exemple, une batterie autonome 26 adaptée pour alimenter électriquement le module électronique 22.

En variante ou en complément, le feu lumineux 10 comprend en outre un câble 28 d'alimentation électrique de chaque source lumineuse 16 et des moyens 30 de connexion électrique du module électronique 22 audit câble 28, le câble d'alimentation 28 étant destiné à être relié électriquement à une source externe d'alimentation, non représentée, disposée à l'extérieur du boîtier de protection 20.

Lorsque le feu lumineux 10 comprend le câble d'alimentation électrique 28, le feu lumineux 10 comprend en outre de préférence un détecteur 32 d'une coupure d'alimentation électrique à travers le câble d'alimentation 28, et l'émetteur 24 est alors adapté pour émettre un premier signal d'alerte en cas de détection de la coupure d'alimentation par le détecteur de coupure 32. Dans une variante selon l'invention, lorsque le feu lumineux 10 est destiné à être fixé au fuselage de l'aéronef, le feu lumineux 10 comprend en outre un détecteur 34 d'au moins une anomalie de vol par rapport à un plan de vol de l'aéronef, et l'émetteur 24 est alors adapté pour émettre un deuxième signal d'alerte en cas de détection d'une ou plusieurs anomalies de vol par le détecteur d'anomalie 34.

Dans une autre variante selon l'invention, le feu lumineux 10 comprend au moins un capteur 36 de mesure d'une grandeur physique et un détecteur 38 d'au moins un écart entre une valeur mesurée par un capteur 36 correspondant et une plage de valeurs prédéfinie respective. Le cas échéant, l'émetteur 24 est adapté pour émettre un troisième signal d'alerte en cas de détection du ou des écarts par le détecteur d'écart 38.

Le socle 12 est, dans l'exemple de réalisation des figures 1 et 2, en forme d'un parallélépipède rectangle et comporte une face avant 40, une face latérale 42 et une face arrière 44. La face avant 40 est en forme d'une platine comportant des trous 46 pour le passage de moyens, non représentés, de fixation du feu lumineux à un appareil, tel que l'aéronef. La face avant 40 comporte également une zone circulaire 48 de réception du capot de protection 14. La face arrière 44 est équipée d'un connecteur 50 pour relier le câble d'alimentation 28 à la source externe d'alimentation, le câble d'alimentation 28 étant connecté au connecteur 50.

Le capot de protection 14 est, dans l'exemple de réalisation des figures 1 et 2, en forme d'un cylindre fermé à l'une de ses extrémités par une calotte demi-sphérique, et ouvert en son autre extrémité. L'extrémité ouverte du capot de protection 14 est destinée à être reçue dans la zone circulaire 48 de la face avant 40 du socle.

Le capot de protection 14 est transparent ou translucide afin de permettre le passage d'un faisceau lumineux 52A, 52B émis par chaque source lumineuse 16A, 16B. Le capot de protection 14 est, par exemple, réalisé en verre ou encore en un matériau plastique.

Le capot de protection 14 est assemblé avec le socle 12 par l'intermédiaire d'une collerette 53, fixée par exemple à la face avant 40 et autour de la zone circulaire 48.

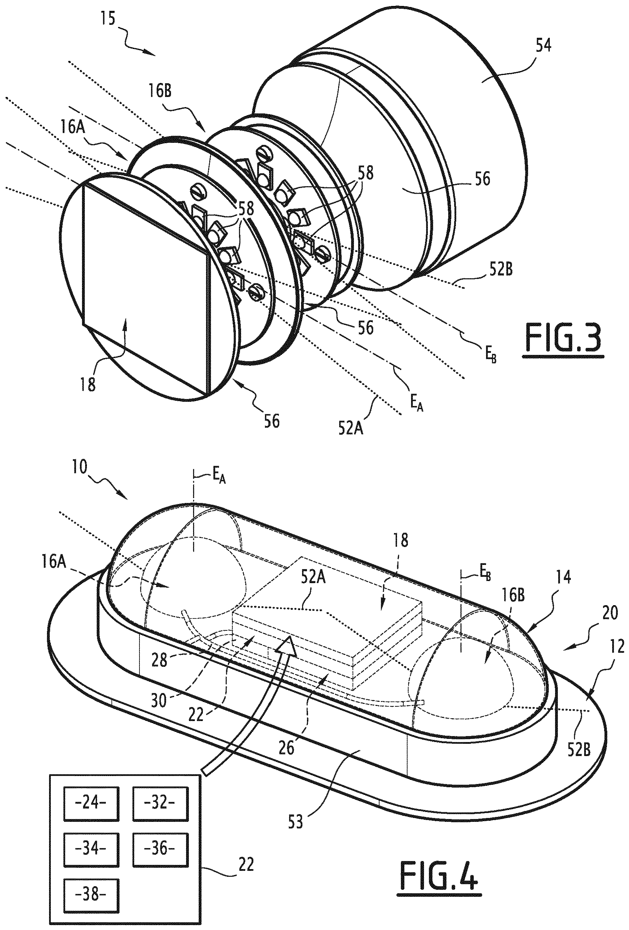

Le bloc lumineux 15 comprend une ou plusieurs sources lumineuses 16A, 16B. Dans l'exemple de réalisation de la figure 3, le bloc lumineux 15 comprend la première source lumineuse 16A et la deuxième source lumineuse 16B. Il comprend en outre une embase 54 de fixation au socle 12, ainsi que plusieurs réflecteurs 56 aptes à guider les faisceaux lumineux 52A, 52B émis par les sources lumineuses 16A, 16B.

Chaque source lumineuse 16A, 16B est adaptée pour émettre le faisceau lumineux 52A, 52B correspondant à travers le capot de protection 14, chaque faisceau lumineux 52A, 52B s'étendant selon un axe d'éclairement E_{A}, E_{B}.

Dans l'exemple de réalisation de la figure 3, chaque source lumineuse 16A, 16B comporte une pluralité de diodes électroluminescentes 58.

Chaque antenne radioélectrique 18 est adaptée pour émettre et/ou recevoir des ondes radioélectriques vers et/ou depuis l'extérieur du boîtier de protection 20. Chaque antenne radioélectrique 18 est par exemple une antenne Iridium, une antenne GSM (de l'anglais *Global System for Mobile communications*), une antenne GPRS (de l'anglais *General Packet Radio Service*), une antenne 3G, une antenne 4G, une antenne Wi-Fi, c'est à-dire conforme à la norme IEEE 802.11, une antenne Bluetooth, c'est-à-dire conforme à la norme IEEE 802.15, une antenne GlobalStar, une antenne Sarsat, une antenne Cospas, ou encore une antenne GPS.

Chaque antenne radioélectrique 18 est de préférence disposée à l'écart de chaque axe d'éclairement E_{A}, E_{B}. Le fait que chaque antenne radioélectrique 18 soit disposée à l'écart de chaque axe d'éclairement E_{A}, E_{B}, permet de limiter une modification du faisceau lumineux 52A, 52B émis par chaque source lumineuse 16A, 16B.

Chaque antenne radioélectrique 18 est de préférence disposée à l'écart de chaque faisceau lumineux 52A, 52B, afin de ne pas modifier l''éclairement généré par chaque source lumineuse 16A, 16B.

Dans l'exemple de réalisation des figures 2 et 3, l'antenne radioélectrique 18 est sensiblement plane, et en forme d'un parallélépipède rectangle avec une face carrée. L'homme du métier comprendra bien entendu que d'autres formes d'antennes radioélectriques 18 sont adaptées pour être disposées à l'intérieur du boîtier de protection 20.

Dans l'exemple décrit, l'antenne radioélectrique 18 est fixée au socle 12 via le bloc lumineux 15, l'antenne radioélectrique 18 étant fixée en partie supérieure du bloc lumineux 15 à l'opposé de l'embase 54 qui forme la partie inférieure du bloc lumineux 15 et qui est fixée au socle 12.

En variante non représentée, l'antenne radioélectrique 18 est fixée au capot de protection 14.

Le module électronique 22 comporte l'émetteur radioélectrique 24, ou en variante l'émetteur-récepteur radioélectrique, relié à l'antenne radioélectrique 18, et comporte en outre, par exemple, un récepteur 60 de signaux de géolocalisation adapté pour déterminer une position du module électronique 22, l'émetteur 24 étant alors adapté pour émettre un signal de position contenant la position du module électronique 22 déterminée par le récepteur de géolocalisation 60. Le récepteur de géolocalisation 60 est, par exemple, un récepteur GPS (de l'anglais *Global Positioning System*). Lorsque le module électronique 22 comporte le récepteur de signaux de géolocalisation 60, le module électronique 22 forme une balise de positionnement, et est également appelé balise.

Dans l'exemple de réalisation de réalisation de la figure 2, le module électronique 22 comporte en outre le détecteur de coupure 32, le détecteur d'anomalie 34, le ou les capteurs de mesure 36 et le détecteur d'écart 38.

En variante non représentée, un ou plusieurs des éléments parmi le détecteur de coupure 32, le détecteur d'anomalie 34, le ou les capteurs de mesure 36 et le détecteur 38 sont disposés à l'intérieur du boîtier de protection 20, tout en étant en dehors du module électronique 22. Le cas échéant, ce ou ces éléments sont également alimentés par le câble électrique 28 et/ou par la batterie autonome 26.

L'émetteur radioélectrique 24 est compatible avec l'antenne radioélectrique 18 à laquelle il est relié, et est par exemple un émetteur Iridium, un émetteur GSM, un émetteur Wi-Fi, un émetteur Bluetooth, un émetteur GlobalStar, ou encore un émetteur GPS.

Lorsque l'émetteur radioélectrique 24 est adapté pour émettre l'un des premier, deuxième et troisième signaux d'alerte, l'émetteur radioélectrique 24 est alors compatible avec une norme de radiocommunication, telle que la norme Iridium, la norme GSM, la norme GPRS, la norme 3G, la norme 4G, la norme WiFi, la norme Bluetooth et/ou la norme GlobalStar, la norme Sarsat, la norme Cospas.

La batterie autonome 26 forme un dispositif de stockage d'énergie électrique, adapté à fournir de l'énergie électrique au module électronique 22 en cas de besoin, notamment en cas de coupure de l'alimentation électrique via le câble d'alimentation 28. La batterie 26 est reliée électriquement au module électronique 22, de préférence via une liaison électrique 62 indépendante, visible sur la figure 2.

Le détecteur de coupure 32 est adapté pour détecter une absence d'alimentation électrique, notamment après une alimentation électrique fournie initialement à travers le câble d'alimentation 28. Le détecteur de coupure 32 est par exemple adapté pour détecter une absence de tension sur le câble d'alimentation 28, notamment suite à la présence initiale d'une tension sur ce même câble 28. Le détecteur de coupure 32 est de manière générale adapté pour détecter une absence de tension sur le câble d'alimentation 28. En cas de détection d'une coupure, le détecteur de coupure 32 est également adapté pour transmettre une information relative à cette détection à l'émetteur radioélectrique 24, afin qu'il émette le premier signal d'alerte correspondant à la détection de la coupure de l'alimentation du module électronique 22 sur le câble 28.

Le détecteur d'anomalie 34 est adapté pour détecteur au moins une anomalie de vol par rapport au plan de vol de l'aéronef lorsque le feu lumineux 10 est fixé audit aéronef. Le détecteur d'anomalie 34 est en outre apte à envoyer à l'émetteur radioélectrique 24 une information relative à ladite détection d'anomalie(s) de vol, afin que l'émetteur radioélectrique 24 puisse à son tour émettre le deuxième signal d'alerte correspondant à la détection de la ou des anomalies de vol.

Chaque anomalie de vol est de préférence choisie parmi le groupe consistant en : une variation de pente de l'aéronef supérieure à un seuil prédéfini, une variation d'altitude de l'aéronef supérieure à un seuil prédéfini pendant une période temporelle prédéfinie et une variation de position par rapport à une route prédéfinie.

De manière générale, l'anomalie de vol est déterminée via un algorithme de calcul, connu en soi, prenant en compte un ensemble de paramètres de vol de l'aéronef.

Chaque capteur de mesure 36 est adapté pour mesurer une grandeur physique correspondante, et chaque grandeur physique est de préférence choisie parmi le groupe consistant en : un choc, une température, une pression et une hydrométrie.

Le détecteur d'écart 38 est alors adapté pour détecter au moins un écart entre une valeur mesurée par un capteur 36 correspondant et une plage de valeurs prédéfinies correspondant à la grandeur physique mesurée. Le détecteur d'écart 38 est en outre adapté pour transmettre à l'émetteur radioélectrique 24 une information relative à la détection du ou des écarts, afin que l'émetteur radioélectrique 24 émette à son tour le troisième signal d'alerte correspondant à la détection du ou desdits écarts.

Le procédé de fabrication du feu lumineux 10 selon l'invention comprend de manière générale une étape de fixation de l'antenne radioélectrique 18 à un élément parmi le socle 12 et le capot de protection 14, suivie d'une étape d'assemblage du socle 12 et du capot de protection 14 pour former le boîtier de protection 20, chaque source lumineuse 16 étant disposées à l'intérieur du boîtier de protection 20, l'antenne radioélectrique 18 étant adaptée pour émettre des ondes radioélectriques vers l'extérieur du boîtier de protection 20.

Lors de l'étape de fixation de l'antenne 18, l'antenne radioélectrique 18 est par exemple disposée à l'intérieur du boîtier de protection 20.

Lorsque le feu lumineux 10 selon l'invention est fabriqué à partir d'un feu lumineux existant et que l'antenne radioélectrique 18 est destinée à être disposée à l'intérieur du boîtier de protection 20, le procédé de fabrication comprend en outre, préalablement à l'étape de fixation de l'antenne, une étape de désassemblage du socle 12 et du capot de protection 14, afin de fixer l'antenne radioélectrique 18, lors de l'étape de fixation, à l'intérieur du boîtier de protection 20 à l'élément parmi le socle 12 et le capot de protection 14.

Le feu lumineux 10 selon l'invention permet alors, outre la fonction de la signalisation visuelle de par la ou les sources lumineuses 16, de proposer une fonction supplémentaire d'émission et/ou de réception d'ondes radioélectriques vers et/ou depuis l'extérieur du feu lumineux, de par la ou les antennes radioélectriques 18.

Cette fonctionnalité supplémentaire est particulièrement adaptée lorsque le feu lumineux 10 est fixé à un aéronef, qu'il s'agisse d'un feu de position, d'un feu anticollision ou encore d'un feu d'alarme, afin d'apporter une réponse à un évènement récent au cours duquel un avion a disparu subitement des écrans radars, sans qu'il puisse encore être retrouvé plusieurs mois après cette disparition inexpliquée.

En effet, selon un aspect avantageux complémentaire, le feu lumineux 10 comprend le module électronique 22 qui comporte elle-même l'émetteur radioélectrique 24, et est alors adapté pour émettre, de manière autonome, des signaux radioélectriques.

En outre, lorsque le feu lumineux 10 comprend la batterie autonome 26, il ne peut pas être désactivé subitement et/ou sciemment par l'équipage de l'aéronef, et est encore capable de fonctionner pendant une durée prédéterminée, après une coupure éventuelle de l'alimentation fournie par le câble d'alimentation 28.

En complément, lorsque le feu lumineux 10 comprend le détecteur de coupure 32, il est en outre capable de détecter une coupure de l'alimentation fournie à travers le câble d'alimentation 28 et d'émettre le premier signal d'alerte via son émetteur radioélectrique 24.

Le feu lumineux 10 est de manière générale apte à détecter toute anomalie de vol de par le détecteur d'anomalie 34, lorsque le feu lumineux 10 est fixé à l'aéronef.

Le feu lumineux 10 est également de manière générale apte à détecter tout écart dans l'environnement extérieur, à proximité de l'appareil, auquel le feu lumineux 10 est fixé de par le ou les capteurs de mesure 36 et le détecteur d'écart 38. Le détecteur d'écart 38 est en effet apte à détecter un choc important, une température en dehors d'une plage prédéfinie, ou bien une variation importante de température, une pression en dehors d'une plage prédéfinie, ou encore une variation importante de pression, ainsi qu'un écart anormal lié à l'hydrométrie.

Lorsque le module électronique comporte en outre le récepteur de géolocalisation 60, tel que le récepteur GPS, le feu lumineux 10 est apte à déterminer sa position géographique à tout instant, et il est alors possible d'ajouter une information relative à la position du feu lumineux à chaque signal d'alerte émis parmi les premier, deuxième et troisièmes signaux d'alerte.

En effet, on comprendra aisément qu'il est non seulement utile qu'une alerte soit émise en cas d'incident, telle qu'une coupure de l'alimentation électrique, une anomalie de vol, ou encore un brusque changement dans l'environnement extérieur du feu lumineux, mais qu'il est encore préférentiel que ce signal d'alerte soit couplé à la position du feu lumineux 10. Ceci permettra alors de connaitre la position de l'appareil, au moment où le feu lumineux 10 a détecté un incident relatif à l'appareil, tel que l'aéronef.

L'homme du métier comprendra en outre qu'il est particulièrement bien adapté de disposer l'antenne radioélectrique 18 solidairement au boîtier de protection 20 du feu lumineux, de préférence à l'intérieur du boîtier de protection 20, étant donné que le feu lumineux 10 est généralement fixé en un emplacement particulièrement adapté de l'appareil, cet emplacement de fixation permettant au feu lumineux 10 d'être bien visible depuis l'extérieur de l'appareil, et étant alors également favorable à une bonne diffusion des ondes radioélectriques émises et/ou reçues par l'antenne radioélectrique 18.

La figure 4 illustre un deuxième mode de réalisation de l'invention, pour lequel les éléments identiques au premier mode de réalisation, décrit précédemment, sont repérés par des références identiques, et ne sont pas décrits à nouveau.

Selon ce deuxième mode de réalisation, le socle 12 et le capot de protection 14 présentent des formes différentes de celles du socle et du capot du premier mode de réalisation, tout en étant solidaires l'un de l'autre et en formant de manière analogue le boîtier de protection 20.

Dans l'exemple de la figure 4, le capot de protection 14 est en forme d'un demi-cylindre pourvu à chacune de ses extrémités d'un quart de sphère, et le socle 12 présente une forme adaptée à recevoir le capot de protection 14, le socle 12 et le capot de protection 14 formant le boîtier de protection 20 lorsqu'ils sont assemblés l'un à l'autre.

Selon ce deuxième mode de réalisation, le feu lumineux 10 comprend deux sources lumineuses 16A, 16B, et les sources lumineuses 16A, 16B sont davantage espacées l'une de l'autre que dans le premier mode de réalisation. Selon ce deuxième mode de réalisation, l'antenne radioélectrique 18 est alors, par exemple, disposée entre les deux sources lumineuses 16A, 16B.

Selon ce deuxième mode de réalisation, le module électronique 22 est par exemple disposé sous l'antenne radioélectrique 18, c'est-à-dire entre l'antenne radioélectrique 18 et le socle 12.

Dans l'exemple de la figure 4, l'antenne radioélectrique 18 est fixée au socle 12 via le module électronique 22. En variante, non représentée, l'antenne radioélectrique 18 est fixée au capot de protection 14.

Selon ce deuxième mode de réalisation, le module électronique 22 comprend, de manière analogue au premier mode de réalisation, l'émetteur radioélectrique 24 relie à l'antenne radioélectrique 18, le détecteur de coupure 32, le détecteur d'anomalie de vol 34, le ou les capteurs de mesure 36 et le détecteur d'écart 38, le module électronique 22 étant reliée en outre au câble d'alimentation 28 via les moyens de connexion électrique 30.

Selon ce deuxième mode de réalisation et en complément facultatif, le feu lumineux 10 comprend la batterie autonome 26 adaptée pour alimenter électriquement le module électronique 22, notamment en l'absence d'alimentation électrique à travers le câble d'alimentation 28.

Le fonctionnement du feu lumineux 10 selon ce deuxième mode de réalisation est analogue à celui décrit pour le premier mode de réalisation, et n'est pas décrit à nouveau.

Les avantages du feu lumineux 10 selon ce deuxième mode de réalisation sont identiques à ceux décrits pour le premier mode de réalisation, et ne sont pas décrits à nouveau.

On conçoit ainsi que le feu lumineux 10 selon l'invention permet de proposer une double fonctionnalité, à savoir la fonctionnalité initiale de signalisation visuelle de par les sources lumineuses 16A, 16B, et la fonctionnalité supplémentaire d'émission et/ou de réception d'ondes radioélectriques de par l'antenne radioélectrique 18.

## Revendications

1. Feu lumineux (10) comprenant :
- un socle (12),
- un capot de protection (14) et
le socle (12) et le capot de protection (14) étant solidaires l'un de l'autre et formant un boitier de protection (20),
- au moins une source lumineuse (16A, 16B) adaptée pour émettre un faisceau lumineux (52A, 52B) à travers le capot de protection (14), chaque source lumineuse (16A, 16B) étant disposée à l'intérieur du boitier de protection,
- une antenne radioélectrique (18) solidaire du boitier de protection (20), l'antenne radioélectrique (18) étant adaptée pour émettre et/ou recevoir des ondes radioélectriques vers et/ou depuis l'extérieur du boitier de protection (20),
- un module électronique (22) comportant un émetteur radioélectrique (24) relié à l'antenne radioélectrique (18), l'émetteur (24) étant adapté pour émettre, via l'antenne radioélectrique (18), des signaux radioélectriques vers l'extérieur du boitier de protection (20),
**caractérisé en ce que** le feu lumineux (10) est destiné à être fixé au fuselage d'un aéronef, le feu lumineux (10) comprend en outre un détecteur (34) d'au moins une anomalie de vol par rapport à un plan de vol de l'aéronef, et l'émetteur (24) est adapté pour émettre un deuxième signal d'alerte en cas de détection de la ou des anomalies de vol,
chaque anomalie de vol étant de préférence choisie parmi le groupe consistant en : une variation de pente de l'aéronef supérieure à un seuil prédéfini, une variation d'altitude de l'aéronef supérieure à un seuil prédéfini pendant une période temporelle prédéfinie, une variation de position par rapport à une route prédéfinie et une combinaison de paramètres de vol en dehors d'une plage prédéterminée de valeurs.

2. Feu lumineux (10) comprenant :
- un socle (12),
- un capot de protection (14) et
le socle (12) et le capot de protection (14) étant solidaires l'un de l'autre et formant un boitier de protection (20),
- au moins une source lumineuse (16A, 16B) adaptée pour émettre un faisceau lumineux (52A, 52B) à travers le capot de protection (14), chaque source lumineuse (16A, 16B) étant disposée à l'intérieur du boitier de protection,
- une antenne radioélectrique (18) solidaire du boitier de protection (20), l'antenne radioélectrique (18) étant adaptée pour émettre et/ou recevoir des ondes radioélectriques vers et/ou depuis l'extérieur du boitier de protection (20),
- un module électronique (22) comportant un émetteur radioélectrique (24) relié à l'antenne radioélectrique (18), l'émetteur (24) étant adapté pour émettre, via l'antenne radioélectrique (18), des signaux radioélectriques vers l'extérieur du boitier de protection (20),
**caractérisé en ce que** le feu lumineux (10) comprend en outre au moins un capteur (36) de mesure d'une grandeur physique et un détecteur (38) d'au moins un écart entre une valeur mesurée par un capteur (36) respectif et une plage de valeurs prédéfinie respective, et l'émetteur (24) est adapté pour émettre un troisième signal d'alerte en cas de détection du ou des écarts,
chaque grandeur physique étant de préférence choisie parmi le groupe consistant en : un choc, une température, une pression et une hydrométrie.

3. Feu lumineux (10) selon l'une quelconque des revendications précédentes,
dans lequel l'antenne radioélectrique (18) est disposée à l'intérieur du boitier de protection (20).

4. Feu lumineux (10) selon l'une quelconque des revendications précédentes,
dans lequel le feu lumineux (10) comprend en outre une batterie autonome (26) adaptée pour alimenter électriquement le module électronique (22).

5. Feu lumineux (10) selon l'une quelconque des revendications précédentes, dans lequel le feu lumineux (10) comprend en outre un câble (28) d'alimentation électrique de chaque source lumineuse (16A, 16B) et des moyens (30) de connexion électrique du module électronique (22) audit câble (28), le câble d'alimentation (28) étant destiné à être relié électriquement à une source externe d'alimentation disposée à l'extérieur du boitier de protection (20), et
dans lequel le feu lumineux (10) comprend en outre un détecteur (32) d'une coupure d'alimentation électrique à travers le câble d'alimentation (28), et l'émetteur (24) est adapté pour émettre un premier signal d'alerte en cas de détection de la coupure d'alimentation.

6. Feu lumineux (10) l'une quelconque des revendications précédentes, dans lequel le module électronique (22) comporte en outre un récepteur (60) de signaux de géolocalisation adapté pour déterminer une position du module électronique (22), et l'émetteur est adapté pour émettre un signal de position contenant la position déterminée du module électronique (22).

7. Feu lumineux (10) selon l'une quelconque des revendications précédentes,
dans lequel chaque faisceau (52A, 52B) lumineux s'étend selon un axe d'éclairement (E_{A}, E_{B}), et chaque antenne radioélectrique (18) est disposée à l'écart de chaque axe d'éclairement (E_{A}, E_{B}).

## Patentansprüche

1. Leuchtsignallicht (10), aufweisend:
- einen Sockel (12),
- eine Schutzabdeckung (14) und
wobei der Sockel (12) und die Schutzabdeckung (14) miteinander fest verbunden sind und ein Schutzgehäuse (20) bilden,
- mindestens eine Lichtquelle (16A, 16B), welche dazu eingerichtet ist, einen Lichtstrahl (52A, 52B) durch die Schutzabdeckung (14) hindurch auszusenden, wobei jede Lichtquelle (16A, 16B) an einem Inneren des Schutzgehäuses angeordnet ist,
- eine Funkantenne (18), welche fest mit dem Schutzgehäuse (20) verbunden ist, wobei die Funkantenne (18) eingerichtet ist zum Aussenden und/oder Empfangen von Funkwellen zur und/oder von dem Äußeren des Schutzgehäuses (20),
- ein elektronisches Modul (22), welches eine Funk-Sendeeinrichtung (24) aufweist, die mit der Funkantenne (18) verbunden ist, wobei die Sendeeinrichtung (24) dazu eingerichtet ist, über die Funkantenne (18) Funksignale zum Äußeren des Schutzgehäuses (20) hin auszusenden,
**gekennzeichnet dadurch, dass** das Leuchtsignallicht (10) dazu vorgesehen ist, an einem Rumpf eines Flugzeugs befestigt zu sein, wobei das Signallicht (10) ferner einen Detektor (34) von mindestens einer Flug-Anomalie in Bezug auf einen Flugplan des Flugzeugs aufweist, und wobei die Sendeeinrichtung (24) dazu eingerichtet ist, ein zweites Alarm-Signal im Fall einer Detektion der Flug-Anomalie oder von Flug-Anomalien auszusenden,
wobei jede Flug-Anomalie vorzugsweise aus der Gruppe ausgewählt ist, welche besteht aus: einer Veränderung der Steigung des Flugzeugs, welche größer ist als eine vordefinierte Untergrenze, eine Veränderung der Flughöhe des Flugzeugs, welche größer ist als eine vordefinierte Untergrenze während einer vordefinierten Zeitdauer, eine Veränderung der Position bezüglich einer vordefinierten Route und eine Kombination von Flugparametern außerhalb eines vorbestimmten Temperaturbereichs.

2. Leuchtsignallicht (10), aufweisen:
- einen Sockel (12),
- eine Schutzabdeckung (14), und
wobei der Sockel (12) und die Schutzabdeckung (14) miteinander fest verbunden sind und ein Schutzgehäuse (20) bilden,
- mindestens eine Lichtquelle (16A, 16B), welche dazu eingerichtet ist, einen Lichtstrahl (52A, 52B) durch die Schutzabdeckung (14) hindurch auszusenden, wobei jede Lichtquelle (16A, 16B) an einem Inneren des Schutzgehäuses angeordnet ist,
- eine Funkantenne (18), welche fest mit dem Schutzgehäuse (20) verbunden ist, wobei die Funkantenne (18) eingerichtet ist zum Aussenden und/oder Empfangen von Funkwellen zur und/oder von dem Äußeren des Schutzgehäuses (20),
- ein elektronisches Modul (22), welches eine Funk-Sendeeinrichtung (24) aufweist, die mit der Funkantenne (18) verbunden ist, wobei die Sendeeinrichtung (24) dazu eingerichtet ist, über die Funkantenne (18) Funksignale zum Äußeren des Schutzgehäuses (20) hin auszusenden,
**gekennzeichnet dadurch, dass** das Leuchtsignallicht (10) ferner mindestens einen Sensor (36) zum Messen einer physikalischen Größe und einen Detektor (38) mindestens eines Unterschieds zwischen einem mittels eines jeweiligen Sensors (36) gemessenen Wert und einem jeweiligen vordefinierten Wertebereich aufweist, wobei die Sendeeinrichtung (24) dazu eingerichtet ist, ein drittes Alarm-Signal im Fall einer Detektion des Unterschieds oder von Unterschieden auszusenden,
wobei jede physikalische Größe vorzugsweise aus der Gruppe ausgewählt ist, welche bestehet aus: einem Stoß, einer Temperatur und einer Hydrometrie.

3. Leuchtsignallicht (10) gemäß irgendeinem der vorhergehenden Ansprüche, wobei die Funkantenne (18) angeordnet an dem Inneren des Schutzgehäuses (20) ist.

4. Leuchtsignallicht (10) gemäß irgendeinem der vorhergehenden Ansprüche, wobei das Leuchtsignallicht (10) ferner eine eigenständige Batterie (26) aufweist, welche dazu eingerichtet ist, das elektronische Modul (22) elektrisch zu versorgen.

5. Leuchtsignallicht (10) gemäß irgendeinem der vorhergehenden Ansprüche, wobei das Leuchtsignallicht (10) ferner ein Kabel (28) zur elektrischen Versorgung jeder Lichtquelle (16A, 16B) und Mittel (30) zur elektrischen Verbindung des elektronischen Moduls (22) mit dem Kabel (28) aufweist, wobei das Kabel zur Versorgung (28) dazu vorgesehen ist, elektrisch verbunden mit einer externen Versorgungsquelle, welche an dem Äußeren des Schutzgehäuses (20) angeordnet ist, zu sein, und
wobei das Leuchtsignallicht (10) ferner einen Detektor (32) einer Unterbrechung der elektrischen Versorgung über das Kabel zur Versorgung (28) aufweist und die Sendeeinrichtung (24) dazu eingerichtet ist, ein erstes Alarm-Signal im Fall einer Detektion der Unterbrechung der Versorgung auszusenden.

6. Leuchtsignallicht (10) gemäß irgendeinem der vorherigen Ansprüche, wobei das elektronische Modul (22) ferner einen Empfänger (60) von Signalen zur Ortsbestimmung aufweist, welcher dazu eingerichtet ist, eine Position des elektronischen Moduls (22) zu bestimmen, und wobei die Sendeeinrichtung dazu eingerichtet ist, ein Positionssignal, welches die bestimmte Position des elektronischen Moduls (20) enthält, auszusenden.

7. Leuchtsignallicht (10) gemäß irgendeinem der vorhergehenden Ansprüche, wobei jeder Lichtstrahl (52A, 52B) sich entlang einer Beleuchtungsachse (E_{A}, E_{D}) erstreckt und jede Funkantenne (18) im Abstand von jeder Beleuchtungsachse (E_{A}, E_{B}) angeordnet ist.

## Claims

1. Signal light (10), comprising:
- a base (12),
- a protective cover (14), and
the base (12) and the protective cover (14) being integral with one another and forming a protective housing (20),
- at least one light source (16A, 16B) adapted to emit a beam of light (52A, 52B) through the protective cover (14), each light source (16A, 16B) being arranged inside the protective housing,
- a radioelectric antenna (18) integral with the protective housing (20), the radioelectric antenna (18) being adapted to transmit and/or receive radioelectric waves to and/or from the outside of the protective housing (20),
- an electronic module (22) having a radioelectric transmitter (24) connected to the radioelectric antenna (18), the transmitter (24) being adapted to transmit, *via* the radioelectric antenna (18), radioelectric signals to the outside of the protective housing (20),
**characterised in that** the signal light (10) is to be fixed to the fuselage of an aircraft, the signal light (10) further comprises a detector (34) of at least one flight anomaly relative to a flight plan of the aircraft, and the transmitter (24) is adapted to transmit a second warning signal in the event of detection of the flight anomaly or anomalies, each flight anomaly preferably being chosen from the group consisting of: a change in the pitch of the aircraft greater than a predefined threshold, a change in the altitude of the aircraft greater than a predefined threshold for a predefined period of time, a change in position relative to a predefined route, and a combination of flight parameters outside a predetermined range of values.

2. Signal light (10), comprising:
- a base (12),
- a protective cover (14), and
the base (12) and the protective cover (14) being integral with one another and forming a protective housing (20),
- at least one light source (16A, 16B) adapted to emit a beam of light (52A, 52B) through the protective cover (14), each light source (16A, 16B) being arranged inside the protective housing,
- a radioelectric antenna (18) integral with the protective housing (20), the radioelectric antenna (18) being adapted to transmit and/or receive radioelectric waves to and/or from the outside of the protective housing (20),
- an electronic module (22) having a radioelectric transmitter (24) connected to the radioelectric antenna (18), the transmitter (24) being adapted to transmit, *via* the radioelectric antenna (18), radioelectric signals to the outside of the protective housing (20),
**characterised in that** the signal light (10) further comprises at least one sensor (36) for measuring a physical quantity and a detector (38) of at least one difference between a value measured by a respective sensor (36) and a respective predefined range of values, and the transmitter (24) is adapted to transmit a third warning signal in the event of detection of the difference or differences,
each physical quantity preferably being chosen from the group consisting of: an impact, a temperature, a pressure and a hydrometry.

3. Signal light (10) according to any one of the preceding claims, wherein the radioelectric antenna (18) is arranged inside the protective housing (20).

4. Signal light (10) according to any one of the preceding claims, wherein the signal light (10) further comprises an autonomous battery (26) adapted to supply electrical power to the electronic module (22).

5. Signal light (10) according to any one of the preceding claims, wherein the signal light (10) further comprises a cable (28) for supplying electrical power to each light source (16A, 16B) and means (30) for electrically connecting the electronic module (22) to said cable (28), the supply cable (28) being intended to be electrically connected to an external power source arranged outside the protective housing (20), and
wherein the signal light (10) further comprises a detector (32) of a loss of electrical power through the supply cable (28), and the transmitter (24) is adapted to transmit a first warning signal in the event of detection of the loss of power.

6. Signal light (10) according to any one of the preceding claims, wherein the electronic module (22) further has a receiver (60) of geolocation signals adapted to determine a position of the electronic module (22), and the transmitter is adapted to transmit a position signal containing the determined position of the electronic module (22).

7. Signal light (10) according to any one of the preceding claims, wherein each beam (52A, 52B) of light extends according to an axis of illumination (E_{A}, E_{B}), and each radioelectric antenna (18) is arranged away from each axis of illumination (E_{A}, E_{B}).
